# EUROPEAN PATENT APPLICATION

(11) **EP 2 481 860 A1**
(43) Date of publication of application: **01.08.2012**
(21) Application number: 10816741.2
(22) Date of filing: 15.09.2010
(51) Int. Cl.: E04B 1/94, E04C 2/26, E06B 5/16

(54) **METHOD FOR BUILDING MODULAR WALLS AND PARTITIONS RESISTANT TO FIRE AND NOISE**

(30) Priority: 21.09.2009 ES 200930709
(71) Applicant: Thertim, S.l., 46002 Valencia (ES)
(72) Inventor: MATEU CLIMENT, Salvador, E-46002 Valencia (ES)
(74) Representative: Munoz Garcia, Antonio
(86) International application number: PCT/ES2010/070599
(87) International publication number: WO 2011/033160

(57) **Abstract**

The invention relates to a method for the construction of fire and sound resistant modular walls and partitions with panels (1) forming partitions (T) or doors (P), formed by a central core (2) on which there are bonded two insulating layers (3) made of plaster, cork or another fire and sound insulating material, two overlays (4) made of fiberboard, encased in protective film (5) made of aluminum, and respective outer finishing layers (8) which are smooth or decorated with inlaid wood (9) or moldings. The doors (P) are incorporated in a metallic casing (12) fixed to the floor and ceiling, made of metallic tubes (13) forming a grid with the same fire and sound resistance. To reinforce the panel (1) against stresses, a reinforcement layer (6) made of Tablex or the like is intercalated in the core. For a bearing partition, steel plates (7) are incorporated.

## Description

### Object of the Invention

As expressed by the title of the present specification, the invention relates to a method for the construction of fire and sound resistant modular walls and partitions, providing to the function for which it is intended advantages and features of novelty which will be described below in more detail, involving an improvement compared to what is already known on the market in this field.

More particularly, the object of the invention is focused on a method the purpose of which is the construction of walls and partitions based on modular panels the structural configuration of which make them fire resistant and sound insulators which, optionally decorated on one or both faces with moldings of natural or synthetic material, can be both bearing and non-bearing type.

In parallel, the proposed method contemplates making special casings for incorporating the doors in the mentioned partitions, both said casings and the doors being provided with the same fire resistance as the partitions.

### Field of Application of the Invention

The field of application of the present invention is in the technical sector of the construction industry in general, and particularly in the field of building modular walls and partitions.

### Background of the Invention

Currently and in reference to the state of the art, it must be pointed out that though different types of modular panels are known on the market, the applicant is unaware of the existence of any having technical, structural and constitutive features similar to those herein proposed.

### Explication of the Invention

Therefore, the method for the construction of fire and sound resistant modular walls and partitions proposed by the present invention is configured as a novelty within its field of application, the characterizing details distinguishing it being described below and included in the claims attached at the end of the present specification.

Specifically, the invention proposes a method for the construction of fire and sound resistant modular walls and partitions from the use of panels formed by different layers adhered to a central core, preferably on both faces thereof, contemplating among which layers at least a layer of plaster, cork or other fire and sound insulating material, and an overlay and a encasing in paper or aluminum sheet which also covers the core, also being able to have internal reinforcement layers to give greater resistance to the panel when it is required, for example if bending and compression stresses must be withstood, and when it is a bearing partition, it incorporates steel plates bonded to the core or screwed to one another through said core.

The panel is optionally decorated on its outer finishing layer, on one or both faces, by means of incorporating thereto inlaid wood incrustations, embossed and/or debossed moldings in different combinations, also contemplating the combination of different colors or materials.

It should be pointed out that the mentioned panels, with the dimensions and thicknesses suitable in each case, will also serve to build bearing or non-bearing walls and partitions and to build doors, such that they will have the same fire and sound resistance.

It is also important to point out that, according to the method proposed for incorporating doors and forming part of the partitions, the latter are incorporated on a metallic casing fixed from the floor to the ceiling, which is formed by metallic tubes with a rectangular section forming a grid with space in its center for placing the pre-frame, which will house the frame and the door, as well as in the upper part, fractioned panels for being adjusted to the partition. Thus, this casing will have the same fire and sound resistance as the partition and as the door.

The method described for the construction of fire and sound resistant modular walls and partitions therefore represents an innovation of structural and constitutive features unknown until now, and these reasons, combined with its practical usefulness, provide it with sufficient grounds to obtain the exclusive right that is sought.

### Description of the Drawings

To complement the description that is being made and for the purpose of aiding to better understand the features of the invention, a set of drawings is attached to the present specification as an integral part thereof, in which the following has been depicted with an illustrative and nonlimiting character:
Figure 1 shows a schematic cross-section view of an embodiment of the panel used in the method for the construction of fire and sound resistant modular walls and partitions object of the invention, showing the layers comprised therein as well as the configuration and arrangement thereof.
Figure 2 shows a cross-section view of the embodiment of the panel according to the invention shown in Figure 1, reinforced to withstand bending and compression stresses.
Figure 3 shows a cross-section view of the embodiment of the panel according to the invention shown in Figure 1 reinforced with steel plates to form a bearing partition.
Figures 4-A, 4-B and 4-C show respective cross-section views of the panel according to the invention completed with the outer finishing layer, in Figure 4-A it is smooth on one of its faces and has inlaid wood incrustations on the opposite face; in Figure 4-B it incorporates embossed moldings on one of them; and in Figure 4-C it incorporates debossed moldings.
Figures 5 and 6 show respective perspective views of a portion of panel decorated, respectively, with debossed and embossed moldings, the embodiment of Figure 5 having an internal reinforcement layer.
Figures 7 and 8 show several sectional views of the phases that are followed for building the debossed and embossed moldings, respectively.

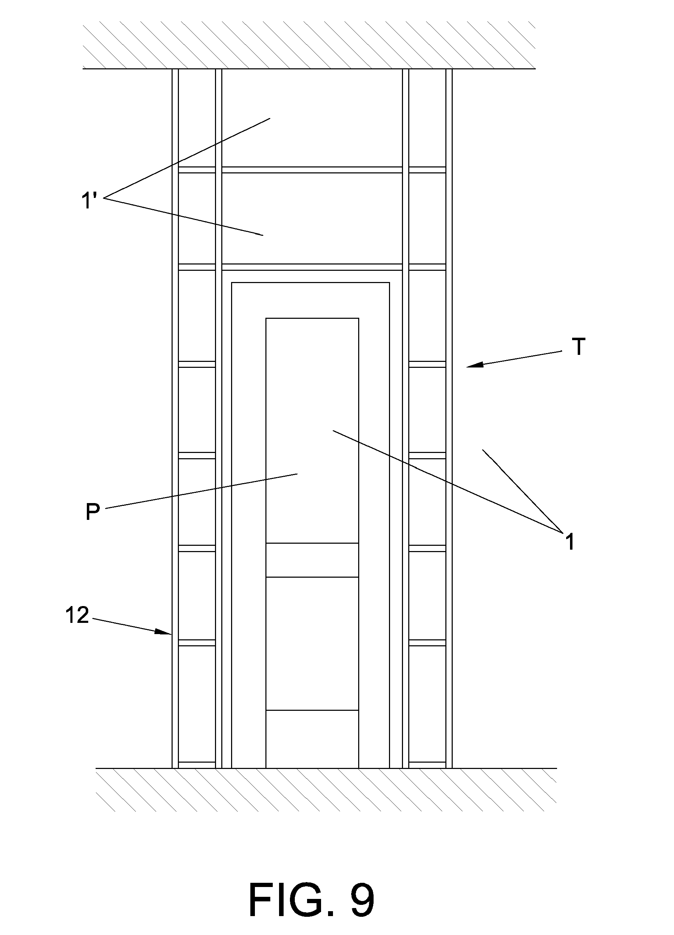

Figure 9 shows an elevational view of the metallic casing for placing the doors.

### Preferred embodiment of the Invention

In view of the mentioned figures, and according to the reference numbers used, a preferred embodiment of the invention can be seen therein, comprising the parts and elements which are indicated and described in detail below.

Therefore, as is observed in said figures, the method proposed for the construction of fire and sound resistant modular walls and partitions contemplates the use of panels (1) which, in addition to being walls or partitions (T), are also doors (P), which are of the type formed by a plurality of layers adhered to one another and to a central core (2), preferably on both faces thereof, following the steps described below.

Thus, bonded on said central core (2), which is formed by a wood particle board with a predetermined thickness, for example about 28 mm, there are two insulating layers (3), one on each face of the central core (2). These insulating layers (3) are made of plaster, cork or any other fire and sound insulating material, and have a thickness of about 5 mm each.

Bonded on the insulating layers (3) there are two overlays (4) made of fiberboard, for example MDF, Tablex or the like, and with a preferred thickness of about 2 mm each, which have furthermore been encased in a protective film (5), specifically with paper or aluminum sheet also covering the central core (2).

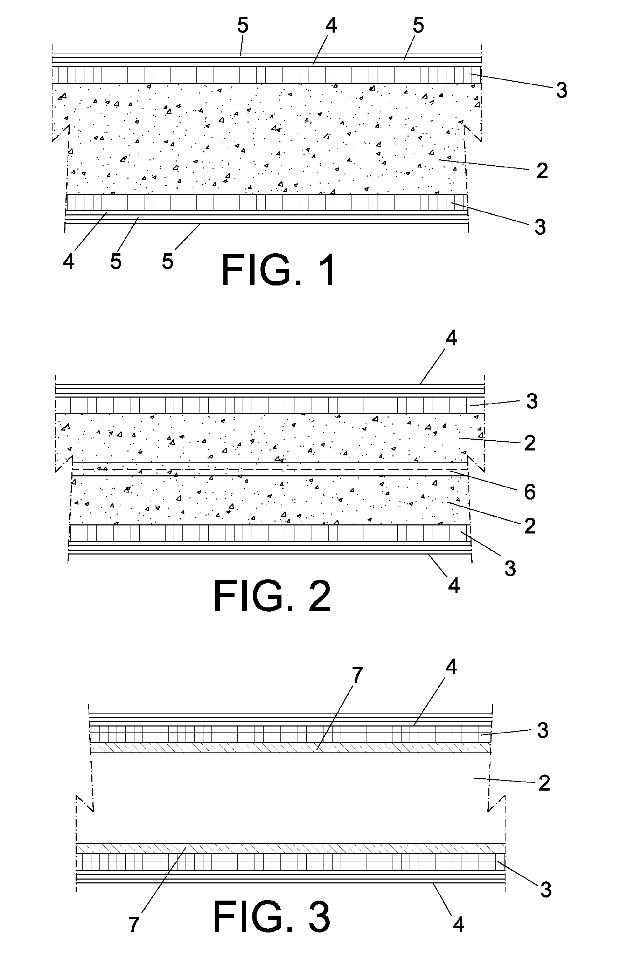

As can be seen in Figure 2, when it is necessary to reinforce the panel (1) against bending and compression stresses, the central core (2) is divided into two parts and a reinforcement layer (6) formed by a Tablex or the like of about 3 mm thick is intercalated between them.

In turn, when the panel (1) is applied for building a bearing partition, incorporated therein between the central core (2) and the insulating layers (3) are two steel plates (7), one on each side, the thickness of which will depend on the stress to be withstood, for example 3 or 4 mm (Figure 3). These steel plates (7) will simply be bonded to the central core (2) or screwed to one another through said central core (2).

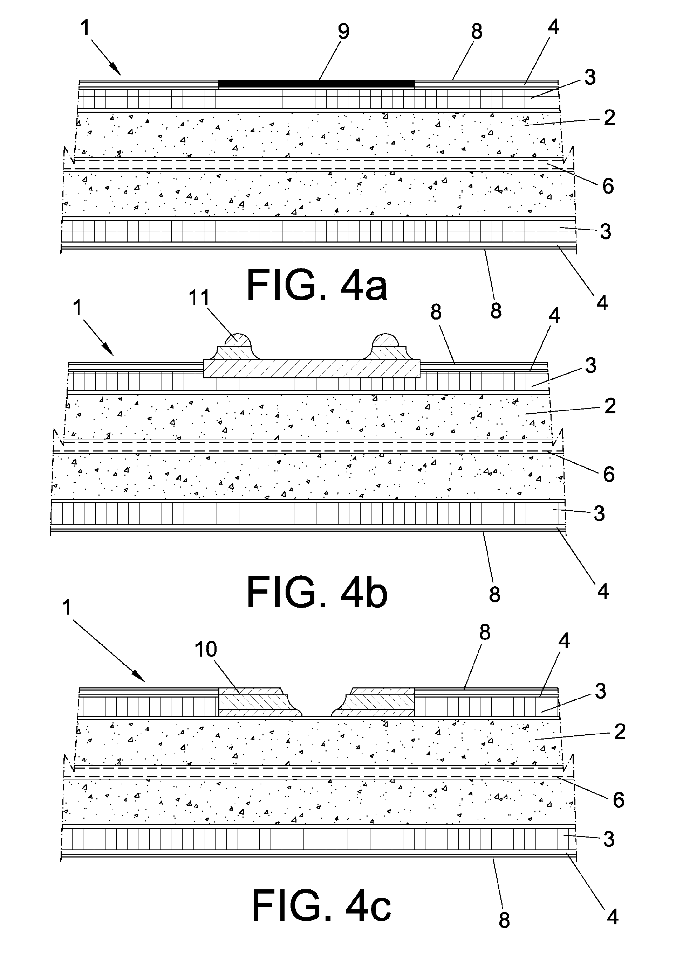

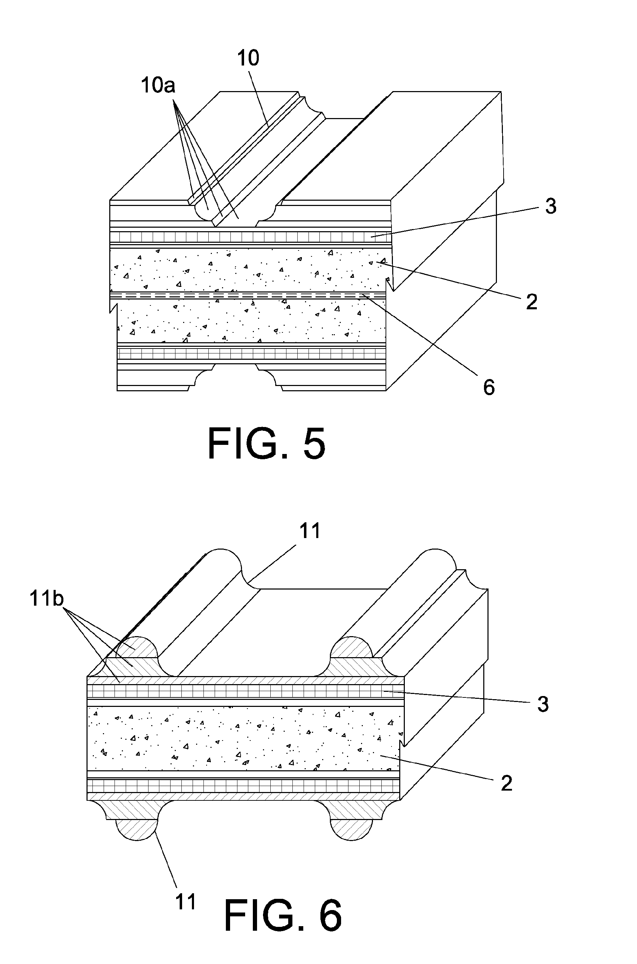

Finally, the panel (1) incorporates respective outer finishing layers (8) which, being made of the desired material, can be smooth or can be decorated with inlaid wood incrustations (9), as shown in the embodiment of Figure 4-A, or it can have debossed moldings (10), as shown in the embodiment of Figure 4-C and 5, or embossed moldings (11) such as the one shown in Figure 4-B and 6, or any combination of said elements, the combination of different colors and/or materials also being contemplated.

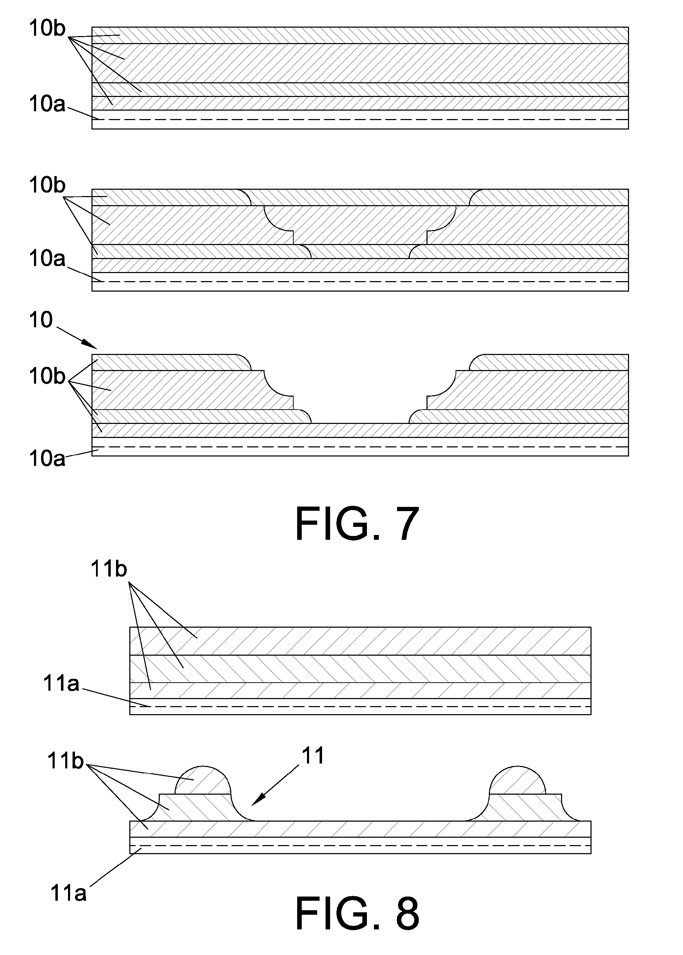

Where appropriate, and considering the views shown in Figures 7 and 8, the process described below is followed for building the debossed and embossed moldings:
Bonded on a balancing slat (10a/11a) made of a wood derivative there are several stacked slats (10b/11b), for example three or four, which can be of the same or of different material, of the same or different thickness, of the same or different nature or color, but always made of materials with a good performance with respect to one another.

Then, a groove or slot is made on the panel (1) of the partition or door to be decorated, and the pack of stacked slats (10b/11b) is introduced therein.

The rest of the panel (1) is covered with the outer finishing layer (8), for example a sheet of natural or synthetic wood, to cover the part thereof that is not decorated.

With a numeric controlled pantograph and with the aid of a tool studied so that it profiles the colors, where appropriate, the molding is carved or cut according to the previously chosen model.

According to the invention, and given that the panels (1), with the dimensions and thicknesses suitable in each case, are suitable for forming bearing or non-bearing partitions (T) and doors (P), for incorporating said doors (P) in said partitions (T), the incorporation thereof on a metallic casing (12) fixed from the floor to the ceiling is contemplated, which casing (12) is formed by a structure of metallic tubes (13) with a rectangular section forming a grid with a space in its central lower part for placing the pre-frame, which will house the frame and the door (P), and in the upper part, for fractioned panels (1') for being adjusted to the partition (T), this casing having the same fire and sound resistance as the partition (T) and as the door (P).

It must finally be pointed out that said doors (P) could be simple passage doors or doors with decoration, reinforced doors, doors with a bearing frame, or doors formed by means of any combination of said features, but all being fire and sound resistant.

Having sufficiently described the nature of the present invention as well as the manner of putting it into practice, it is not considered necessary to further explain it so that any person skilled in the art can understand its scope and the advantages derived from it, hereby stating that other embodiments within its essential nature which differ in detail from the one indicated by way of example, which would also be subject of the protection that is sought provided it does not alter, change or modify its essential principle, can be carried out into practice.

## Claims

1. A method for the construction of fire and sound resistant modular walls and partitions by means of using panels (1) forming both walls or partitions (T) and doors (P), said panels (1) being of the type formed by a plurality of layers adhered to one another and to a central core (2), preferably on both faces thereof, **characterized in that** the following steps are followed for building the panels (1):
- bonded on the central core (2), which is formed by a wood particle board of a predetermined thickness, for example about 28 mm, there are two insulating layers (3), one on each face of the central core (2), made of plaster, cork or any other fire and sound insulating material, and with a thickness of about 5 mm each;
- bonded on the insulating layers (3) there are two overlays (4) made of fiberboard, for example MDF, Tablex or the like, with a preferred thickness of about 2 mm each, which have furthermore been encased in a protective film (5) made of paper or aluminum sheet also covering the central core (2);
- finally, the panel (1) incorporates respective outer finishing layers (8) made of the desired material, which can be smooth or can be decorated inlaid wood incrustations (9), or can have debossed moldings (10), or embossed moldings (11), or any combination of said elements, the combination of different colors and/or materials also being contemplated;
**in that** for incorporating the doors (P) in the partitions (T), said incorporation is done on a metallic casing (12) fixed from the floor to the ceiling, which is formed by a structure of metallic tubes (13) with a rectangular section forming a grid with a space in its central lower part for placing the pre-frame, which will house the frame and the door (P), and in the upper part, for fractioned panels (1') adjusted to the partition (T), this casing having the same fire and sound resistance as the partition (T) and as the door (P).

2. The method for the construction of fire and sound resistant modular walls and partitions according to claim 1, **characterized in that** when it is necessary to reinforce the panel (1) against bending and compression stresses, the central core (2) is divided into two parts and a reinforcement layer (6) formed by a Tablex or the like of about 3 mm thick is intercalated between them.

3. The method for the construction of fire and sound resistant modular walls and partitions according to claim 1, **characterized in that** when the panel (1) is applied for building a bearing partition, incorporated therein between the central core (2) and the insulating layers (3) are two steel plates (7), one on each side, the thickness of which will depend on the stress to be withstood, for example 3 or 4 mm.

4. The method for the construction of fire and sound resistant modular walls and partitions according to claim 3, **characterized in that** the steel plates (7) are simply bonded to the central core (2).

5. The method for the construction of fire and sound resistant modular walls and partitions according to claim 3, **characterized in that** the steel plates (7) are screwed to one another through the central core (2).

6. The method for the construction of fire and sound resistant modular walls and partitions according to claim 1, **characterized in that** the process described below is followed for building the debossed and embossed moldings decorating, where appropriate, the outer finishing layers (8):
- bonded on a balancing slat (10a/11a) made of a wood derivative there are several stacked slats (10b/11b), for example three or four, which can be of the same or of different material, of the same or different thickness, of the same or different nature or color, but always made of materials with a good performance with respect to one another;
- a groove or slot is made on the panel (1) of the partition or door to be decorated, and the pack of stacked slats (10b/11b) is introduced therein;
- the rest of the panel (1) is covered with the outer finishing layer (8), for example a sheet of natural or synthetic wood, to cover the part thereof that is not decorated;
- with a numeric controlled pantograph and with the aid of a tool studied so that it profiles the colors, where appropriate, the molding is carved or cut according to the previously chosen model.
